(19) Europäisches Patentamt
European Patent Office
Office européen des brevets

(11) Veröffentlichungsnummer: **0 000 350**
**B1**

(12) # EUROPÄISCHE PATENTSCHRIFT

(45) Veröffentlichungstag der Patentschrift: **20.01.82**

(21) Anmeldenummer: **78100258.9**

(22) Anmeldetag: **28.06.78**

(51) Int. Cl.³: **C 08 L 83/04,**
C 08 G 18/02, C 09 D 3/82

(54) **Mit Polycarbodiimid modifizierte Organopolysiloxane, Verfahren zu deren Herstellung und deren Verwendung.**

(30) Priorität: **07.07.77 DE 2730743**

(43) Veröffentlichungstag der Anmeldung:
**24.01.79 Patentblatt 79/2**

(45) Bekanntmachung des Hinweises auf die Patenterteilung:
**20.01.82 Patentblatt 82/3**

(84) Benannte Vertragsstaaten:
**BE DE FR GB NL**

(56) Entgegenhaltungen:
**DE - A - 1 945 474**
**DE - A - 2 602 413**
**FR - A - 2 256 225**

(73) Patentinhaber: **BAYER AG**
**Zentralbereich Patente, Marken und Lizenzen**
**D-5090 Leverkusen 1, Bayerwerk (DE)**

(72) Erfinder: **Moretto, Hans-Heinrich, Dr.**
**Formesstrasse 13**
**D-5000 Köln 80 (DE)**
Erfinder: **Steinberger, Helmut, Dr.**
**Doenhoffstrasse 28**
**D-5090 Leverkusen (DE)**
Erfinder: **Larking, Ingrid**
**Brattäsvägen 19**
**S-43800 Landvetter (SE)**
Erfinder: **Sattlegger, Hans, Dr.**
**Auf dem Heidchen 9**
**D-5068 Odenthal-Gloebusch (DE)**

**EP 0 000 350 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

# Mit Polycarbodiimid modifizierte Organopolysiloxane, Verfahren zu deren Herstellung und deren Verwendung

Mit anorganischen und organischen Materialien modifizierte Organopolysiloxane sind an sich bekannt. So werden mit anorganischen Füllstoffen, wie z.B. Siliciumdioxid-Aerogelen, Diatomeenerde, Magnesiumoxid und/oder Eisenoxid vermischte Orgnopolysiloxane oder Organopolysiloxangemische mit zusätzlichen Vernetzungsmitteln und Verarbeitungshilfsstoffen in vielen Bereichen verwendet. Dazu zählt z.B. die Verwendung von sogenannten Ein- oder Zweikomponentensystemen, die unter Einwirking von Feuchtigkeit aushärten, wobei die Härtung durch die Reaktion von OH-funktionellen Siloxanen mit Vernetzungs- und Härtungskatalysatoren wie z.B. Alkylsilikaten oder Alkyltriacyloxysilanen sowie Wasser herbeigeführt wird. Weitere bekannte Vernetzungssysteme beruhen auf der Reaktion von Si-H-haltigen Siloxanen mit ungesättigten Verbindungen in Gegenwart katalytisch wirkender Metallverbindungen oder der Vernetzung durch organische Peroxide.

Die bereits erwähnten anorganischen und organischen Modifizierungsmittel verleihen den damit entstehenden Organopolysiloxan-Massen unterschiedliche Eigenschaften. Zu den mit organischen Materialien, meist Polymeren, modifizierten Organopolysiloxanen gehören z.B. Blockcopolymere, in denen Organopolysiloxanblöcke mit organischen Polymerblöcken (z.B. Polyäthern, Polyestern, Polycarbonaten, Polycarbodiimiden), chemisch verknüpft sind. Derartige Produkte sind z.B. in den Patentschriften US—PS 3 402 192, US 3 701 815 und US—PS 3 189 662 beschrieben. Diese Produkte werden über Mehrstufenverfahren hergestellt und sind somit meist aufwendig zu fertigen und verhalten sich zudem im Vergleich der Eigenschaften im allgemeinen ungünstiger als mit anorganischen Füllstoffen modifizierte Organopolysiloxanmassen.

Weiterhin sind modifizierte Organopolysiloxanmassen bakannt geworden, die durch radikalische Polymerisation ungesättigter organischer Monomerer in Organopolysiloxanen oder durch Mischen entsprechender Bestandteile entstehen. Dabei bilden sich zum Teil nur mit organischen Polymerpartikeln (z.B. Polyolefin, Polystyrol) gefüllte Massen, zum Teil auch Produkte, in denen das organische Polymer teilweise durch Pfropfung mit dem Siloxan verbunden ist. Derartige Massen und Verfahren zu ihrer Herstellung werden beispielsweise in den Patentschriften US—PS 2 965 593 und US—PS 3 627 836 beschrieben.

Die Eigenschaften dieser zuletzt genannten Produkte sind für eine Reihe von Anwendungen jedoch noch unbefriedigend. Die zur Füllung oder Pfropfung bekannt gewordenen Polymere entstehen aus einer oder mehreren ungesättigten Monomeren, die polymerisierbar sind wie z.B. Äthylen, Vinylchlorid oder 1,3-Butadien.

Diese organischen Polymere haben in der Regel eine geringe Temperaturbeständigkeit. Sie übertragen diese ungünstige Eigenschaft auf die daraus entstehenden gehärteten Organopolysiloxanmassen. Sie besitzen außerdem ungünstige Elastomereigenschaften, wie z.B. hohe Druckverformungsreste. Weiterhin verschlechtern sich die mecanischen Eigenschaften bei erhöhter Temperatur erheblich (z.B. Zugfestigkeit). Die Dauerwärmebeständigkeit, durch die sich die Organopolysiloxane sonst auszeichnen, geht hierbei verloren.

Aufgabe der vorliegenden Erfindung war es daher, verbesserte Organopolysiloxanmassen zu schaffen, die auch aus wirtschaftlichen und technischen Gründen die folgenden Bedingungen erfüllen:

a) Die Herstellung der Massen soll ohne großen technisch-apparativen Aufwand und ohne lange Reaktionsdauer erfolgen können, beispielsweise in handelsüblichen Rührgefäßen oder in Mischern.

b) Die hergestellten Massen sollen ohne Anwendung von Lösungsmitteln fließfähig sein und eine ausreichend hohe Lagerstabilität besitzen. Nach erfolgter Vulkanisation müssen sie klebfrei ausgehärtet sein.

c) Die neuen Massen sollen sich nach der Vulkanisation gegenüber anderen organisch modifizierten Organopolysiloxanmassen durch verbesserte thermische Eigenschaften, wie z.B. Dauerwärmebelastbarkeit, und verbesserte mechanische Eigenschaften bei erhöhter Temperatur auszeichnen. Außerdem ist eine Verbesserung der Haftungseigenschaften erwünscht.

Gegenstand der vorliegenden Erfindung sind mit Polycarbodiimid modifizierte $\alpha,\omega$-Dihydroxypolysiloxane, welche dadurch gekennzeichnet sind, daß das $\alpha,\omega$-Dihydroxypolysiloxan und Polycarbodiimid als unterscheidbare Phasen vorliegen.

Die verbesserten organopolysiloxan-Massen gemäß der vorliegenden Erfindung sind also Polycarbodiimid-gefüllte $\alpha,\omega$-Dihydroxypolysiloxan-Mischungen, die aus folgenden zwei Phasen zusammengesetzt sind: (i) einer zusammenhängenden Phase einer Organopolysiloxan-Flüssigkeit und (ii) einer nicht zusammenhängenden Phase aus feinverteilten Teilchen eines Carbodiimid-Polymers, das durch Polykondensation des entsprechenden Monomeren oder Monomerengemisches in Gegenwart des $\alpha,\omega$-Dihydroxypolysiloxans und eines Carbodiimidierungskatalysators erhalten wurde.

Die Polycarbodiimid gefüllten Organopolysiloxan-Massen der vorliegenden Erfindung werden hergestellt durch intensives vermischen des $\alpha,\omega$-Dihydroxypolysiloxans mit Di- oder Polyisocyanaten oder Gemischen daraus in Gegenwart eines die Carbodiimidbildung beschleunigenden Katalysators

oder durch Vermischen der organopolysiloxan-Flüssigkeit mit in situ hergestellten und an sich bekannten Polycarbodiimiden. Die Polymermischung besteht zu 3—80 Gew.-%, vorzugsweise 5—70 Gew.-% aus Polycarbodiimid (bezogen auf die Gesamtmischung).

Die für den erfindungsgemäßen Gebrauch bevorzugten Organopolysiloxan-Flüssigkeiten sind durch die folgende allgemeine Formel gekennzeichnet

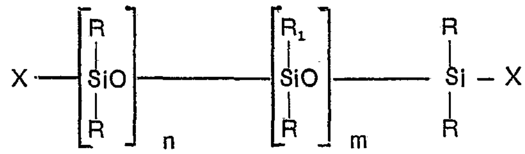

R steht für einen gegebenenfalls substituierten Alkyl-, Alkenyl-, oder Halogenalkylrest mit bis zu 10 C-Atomen,

$R_1$ für Wasserstoff, einen gegebenenfalls substituierten Alkyl-, Alkenyl-, Aryl- oder Halogenalkylrest mit bis zu 10 C-Atomen,

X ist ein Hydroxylrest;

n = 2 bis 1000, vorzugsweise 50 bis 300,

m = 0 bis 50, vorzugsweise 0 bis 10.

Gemische aus verschiedenen Polysiloxanen können ebenfalls verwendet werden.

Ferner sind für die erfindungsgemäße Verwendung Siliconharze, wie sie beispielsweise durch Cohydrolyse von Methyltrichlorsilan und Dimethyldichlorsilan erhältlich sind, alleine für sich oder in Mischung mit den erwähnten Organopolysiloxan-Flüssigkeiten geeignet (vgl. z.B. US—PS 2 587 295, US—PS 2 384 340, US—PS 2 584 341, US—PS 2 584 342, US—PS 2 584 343, US—PS 2 584 344 und US—PS 2 686 739).

Als Di- oder Polyisocyanate kommen solche der allgemeinen Formel

OCNR—R'.NCO

in Frage, wobei R' für einen gegebenenfalls auch mit Isocyanatgruppen substituierten Alkyl- oder Arylrest mit vorzugsweise bis zu 24 C-Atomen steht.

Als solche erfindungsgemäß einzusetzende Ausgangskomponenten kommen aliphatische, cycloaliphatische, araliphatische, aromatische und heterocyclische Polyisocyanate in Betracht, wie sie z.B. von W. Siefgen in Justus Liebigs Annalen der Chemie, 562, Seiten 75 bis 136, beschrieben werden, beispielsweise Äthylen-diisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanatomethyl-cyclohexan (DAS 1,202,785), 2,4- und 2,6-Hexahydrotoluylendiisocyanat sowie beliebige Gemische dieser Isomeren, Hexahydro-1,3- und/oder -1,4-phenylen-diisocyanat, Perhydro-2,4'- und/oder -4,4'-diphenylmethan-diisocyanat, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat, Naphthylen-1,5-diisocyanat, Triphenylmethan-4,4',4''-triisocyanat, Polyphenyl-polymethylen-polyisocyanate, wie sie durch Anilin-Formaldehyd-Kondensation und anschließende Phosgenierung erhalten und z.B. in den britischen Patentschriften 874 430 und 848 671 beschrieben werden, perchlorierte Arylpolyisocyanate, wie sie z.B. in der deutschen Auslegeschrift 1 157 601 beschrieben werden, Carbodiimidgruppen aufweisende Polyisocyanate, wie sie in der deutschen Patentschrift 1 092 007 beschrieben werden, Diisocyanate, wie sie in der amerikanischen Patentschrift 3 492 330 beschrieben werden, Allophanatgruppen aufweisende Polyisocyanate, wie sie z.B. in der britischen Patentschrift 994 890, der belgischen Patentschrift 761 626 und der veröffentlichten holländischen Patentanmeldung 7 102 524 beschrieben werden, Isocyanuratgruppen aufweisende Polyisocyanate, wie sie z.B. in den deutschen Patentschriften 1 022 789, 1 222 067 und 1 027 394 sowie in den deutschen Offenlegungsschriften 1 929 034 und 2 004 048 beschrieben werden, Urethangruppen aufweisende Polyisocyanate, wie sie z.B. in der belgischen Patentschrift 752 261 oder in der amerikanischen Patentschrift 3 394 164 beschrieben werden, acylierte Harnstoffgruppen aufweisende Polyisocyanate gemäß der deutschen Patentschrift 1 230 778, Biuretgruppen aufweisende Polyisocyanate, wie sie z.B. in der deutschen Patentschrift 1 101 394, in der britischen Patentschrift 859 050 und in der französischen Patentschrift 7 017 514 beschrieben werden, durch Telomerisationsreaktionen hergestellte Polyisocyanate, wie sie z.B. in der belgischen Patentschrift 723 640 beschrieben werden, Estergruppen aufweisende Polyisocyanate, wie sie z.B. in den britischen Patentschriften 965 474 und 1 072 956, in der amerikanischen Patentschrift 3 567 763 und in der deutschen Patentschrift 1 231 688 genannt werden, Umsetzungsprodukte der obengenannten Isocyanate mit Acetalen gemäß der deutschen Patentschrift 1 072 385.

Es ist auch möglich, die bei der technischen Isocyanatherstellung anfallenden Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Bevorzugt werden in der Regel die technisch leicht zugänglichen Polyisocyanate, z.B. das 2,4- und 2,6-Toluylendiisocyanat sowie beliebige Gemische dieser Isomeren ("TDI"), Polyphenyl-polymethylen-polyisocyanate, wie sie durch Anilin-Formaldehyd-Kondensation und anschließende Phosgenierung hergestellt werden ("rohes MDI") und Carbodiimidgruppen, Urethangruppen, Alllophanatgruppen, Isocyanuratgruppen, Harnstoffgruppen oder Biuretgruppen aufweisenden Polyisocyanate ("modifizierte Polyisocyanate").

Sofern Polycarbodiimide direkt eingesetzt werden, kommen die an sich bekannten Substanzen, wie sie z.B. in DT—OS 2 318 406 beschrieben sind, in Frage.

Die Carbodiimidisierung der verwendeten Isocyanate erfolgt in an sich bekannten Weise durch Zusammenbringen der Isocyanatkomponente(n) mit einer geeigneten Menge eines die Carbodiimidisierungsreaktion beschleunigenden Katalysators. Hierzu eignen sich die bekannten Katalysatoren, besonders Phospholinoxide:

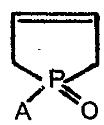

oder

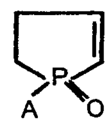

(A = Alkyl- z.B. Methyl-, Äthyl- oder Phenyl-)

oder deren Gemische, die auch im Ring substituiert sein können, oder die entsprechenden Phospholane und Phosphetane,

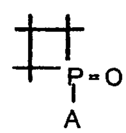

(A = Bedeutung wie oben)

von denen wegen der leichteren Zugänglichkeit das 1-Methyl-1-oxophospholin (Isomerengemisch) bevorzugt wird.

Überraschenderweise sind diese Mischungen stabil und geeignet zur Herstellung von zu Elastomeren härtbaren Formmassen.

Im allgemeinen hat der Hauptteil der festen Teilchen des Homo- oder Copolymers einen mittleren Durchmesser von weniger als etwa 0,4—10 $\mu$m wobei einige der Teilchen einen Durchmesser von weniger als 0,3 $\mu$m haben.

Die erfindungsgemäßen Carbodiimid-modifizierten Polysiloxane werden mit Vorteil so hergestellt, daß man bei Raumtemperatur oder erhöhter Temperatur (bis ca. 160°C) ein $\alpha,\omega$-Dihydroxypolysiloxan mit 5 bis 80 Gew.-% (vorzugsweise 10—60 Gew.-%, bezogen auf die Polymermischung) eines di- und/oder polyfunktionellen Isocyanats oder eines Gemisches mehrere Isocyanate unter Rühren (evtl. in einem Mischer oder Kneter) vermischt und anschließend durch Zugabe katalytischer Mengen (0,01—2%) Phospholinoxid die Carbodiimidisierungsreaktion unter Rühren durchführt. Das bei der Reaktion gebildete $CO_2$ wird bei leicht erhöhter Temperatur und gegebenenfalls unter Vakuum aus der Masse entfernt.

Als besonders vorteilhaft hat sich ein modifiziertes Verfahren zur Darstellung der Massen erwiesen, bei dem die erforderliche Menge $\alpha,\omega$-Dihydroxypolysiloxan zusammen mit dem Carbodiimidisierungskatalysator vorgelegt und gerührt und die entsprechende Menge Isocyanat oder Isocyanatgemisch innerhalb eines vorgegebenen Zeitraumes gleichmäßig und stetig zudosiert wird. Die Zugabe des Isocyanats oder der Isocyanatmischung erfolgt vorzugsweise bei Temperaturen von 25 bis 140°C, vorzugsweise von 50 bis 110°C.

Die Geschwindigkeit der Isocyanatzugabe wird im allgemeinen so gesteuert, daß die eintretende $CO_2$-Entwicklung noch eine homogene Verteilung des gebildeten Carbodiimids erlaubt und ein übermäßiges Aufblähen der Masse vermieden wird. Dies wird im allgemeinen innerhalb von etwa 1 bis etwa 8 Stunden — je nach Ansatzgröße — der Fall sein.

Die Feinteiligkeit der in der Organosiloxanphase verteilten Carbodiimidphase ist abhängig von der Rührgeschwindigkeit, der Temperatur während des Einmischvorganges und der Viskosität der Organosiloxanphase.

Die Viskosität des erhaltenen Systems steigt dabei beträchtlich an und ist abhängig von der Anfangsviskosität der verwendeten Siloxankomponente, vom Füllgrad durch das erzeugte oder eingearbeitete Polycarbodiimid und vom Verteilungsgrad der geschlossenen Phase (vgl. z.B. P. Sherman, Research (London) *8*, 396 (1955).

Die erhaltenen carbodiimidmodifizierten Polysiloxane stellen weiße, meist nicht-transparente, fließfähige und vernetzbare Massen mit mittlerer bis hoher Viskosität dar, die mit vielen der üblichen Katalysatoren, die für die Silanolkondensation geeignet sind, gehärtet werden können.

Als Vernetzungsmittel können die gleichen verwendet werden, die herkömmlicherweise zur Herstellung von Ein- oder Zweikomponentensystemen eingesetzt werden. Als solche kommen beispielsweise Alkoxysiliziumverbindungen, Tetraalkoxysilane, Alkylpolysilikate und Acyloxysiliziumverbindungen in Frage.

Die Herstellung der Ein- oder Zweikomponentenmassen auf Basis der erfindungsgemäßen Polycarbodiimid-Polysiloxan-Mischpolymeren erfolgt durch Vermischen der Polycarbodiimid-Siloxan-Masse mit der Vernetzerkomponente und gegebenenfalls den Füllstoffen und/oder Weichmachern in einem handelsüblichen Mischer oder Kneter. Die genannten Zusammensetzungen können außer Vernetzer und Härtungskatalysator noch Füllstoffe und Weichmacher enthalten. Als Füllstoffe können beispielsweise Quarzmehl, Kreide oder Diatomeenerde oder pyrogen in der Gasphase erzeugtes $SiO_2$ oder andere feinverteilte Metalloxide dienen.

Wie erwähnt können bei Erfordernis Weichmacher zugesetzt werden. Als solche werden flüssige inerte Polydiorganosiloxane eingesetzt, z.B. $\alpha,\omega$-Trimethylsiloxyendgestoppte Polydimethylsiloxane.

Das zur Vulkanisation der Mischpolymeren erforderliche Wasser kann durch Luftfeuchtigkeit oder durch direktes Einmischen den härtbaren Mischpolymerzusammensetzungen beigefügt werden.

Polycarbodiimid modifizierte Organopolysiloxanmassen sind sowohl, wie schon erwähnt, in Substanz für sich verwendbar als auch als Zusatzkomponente in anderen Polymermassen.

Sie zeichnen sich aus durch verbesserte Eigenschaften in bezug auf Temperaturbeständigkeit, Zugfestigkeit bei erhöhter Temperatur und niedrigere Druckverformungsreste.

Bei Raumtemperatur zu Elastomeren härtende Polycarbodiimid modifizierte Organopolysiloxanmassen zeigen nach ihrer Härtung eine hervorragende, gegen Feuchtigkeitseinwirkung beständige Haftung auf Betonuntergrund, die ohne Verwendung von sogenannten Primersubstanzen erzielt wird.

Die Polycarbodiimid modifizierten Organopolysiloxanmassen verbessern als Zusatzkomponente zu beispielsweise Siliconheißvulkanisatmischungen deren Wasserdampfbeständigkeit.

Nachfolgend wird die Erfindung anhand von Beispielen näher erläutert. Die nachfolgend angegebenen Prozentangaben bedeuten, wenn nicht ausdrücklich anders vermerkt, Gewichtsprozente.

## Beispiel 1

Dieses Beispiel illustriert die Herstellung einer Dispersion aus 24% Polycarbodiimid auf Basis von Toluylendiisocyanat und 76% eines $\alpha,\omega$-Dihydroxypolydimethylsiloxans.

Eine Mischung aus 1750 g Polydimethylsiloxan mit endständigen Hydroxygruppen und einer Viskosität von 18000 mPa·s (bei 20°C) und 750 g eines Isomerengemisches aus 80% 2,4- und 20% 2,6-Toluylendiisocyanat werden 4 Stunden mit einem Ankerrührer bei 25°C gerührt. 1,25 g 1-Methylphospholinoxid wird zugegeben, worauf für kurze Zeit eine Gasentwicklung einsetzt. Es wird zunächst 3 Stunden bei 25°C und anschließend 2,5 Stunden bei 50°C nachgerührt.

Man erhält eine weiße, fließfähige Dispersion mit einer Viskosität von ca. 68500 mPa·s. Die durchschnittliche Korngröße des dispergierten Polycarbodiimids beträgt etwa 3 Mikron.

Die Zusammensetzung eines aus der Masse hergestellten kalt härtenden Einkomponentensystems sowie die Eigenschaften des gehärteten Produktes sind in Beispiel 8, Tabelle I wiedergegeben.

Die Haftung einer auf Beton aufgetragenen Probe dieses Einkomponentensystems ist auch nach 4-wöchiger Lagerung unter Wasser unverändert gut.

## Beispiel 2

1528 g Polydimethylsiloxan des Beispiels 1 und 655 g Toluylendiisocyanat des Beispiels 1 werden bei 80°C 1 Stunde gemischt. Man gibt 1,1 ml Methylphospholinoxid zu und rührt weitere 3 Stunden bei 80°C.

Man erhält eine weiße, homogene Dispersion mit einer Viskosität von 53600 mPa·s bei 20°C und einem NCO-Gehalt von 0,2%.

Die Zusammensetzung einer kalt härtenden Masse sowie die Eigenschaften des gehärteten Produktes sind in Beispiel 8, Tabelle 1 angegeben.

Die Haftung einer auf Beton aufgetragenen Probe ist nach 4-wöchiger Lagerung unter Wasser gut.

## Beispiel 3

1400 g Polydimethylsiloxan des Beispiels 1 und 300 g Toluylendiisocyanat des Beispiels 1 werden bei Raumtemperatur gemischt, anschließend auf 80°C unter Rühren erhitzt und eine Stunde bei dieser Temperatur gerührt. Sodann wird 1,0 ml Phospholinoxid zugegeben, worauf eine Gasentwicklung einsetzt. Die Mischung wird nun unter Rühren innerhalb einer Stunde auf Raumtemperatur abgekühlt. Nach erfolgter Abkühlung werden zur Mischung 300 g Toluylen-diisocyanat zugegeben und 3 Stunden bei Raumtemperatur gerührt.

Es wird eine weiße, fließfähige Dispersion mit einer Viskosität von 13300 mPa·s (20°C) erhalten. Die mittlere Korngröße der verteilten Carbodiimidphase beträgt 1—2 Mikron.

Die Zusammensetzung einer kalt härtenden Masse sowie die Eigenschaften des gehärteten Produkts ist in Beispiel 8, Tabelle 1 (Einkomponentensystem) bzw. in Beispiel 9 (Zweikomponentensystem) angegeben.

Beispiel 4

1500 g Polydimethylsiloxan des Beispiels 1 werden auf 45°C erwärmt, 30 Minuten gerührt und 1500 g Toluylendiisocyanat des Beispiels 1 zugegeben. Nach erfolgter Zugabe wird 30 Minuten gerührt und anschließend 1,5 g Phospholinoxid zugesetzt, worauf eine Gasentwicklung einsetzt. Die Masse wird weitere 3 Stunden gerührt, wobei ihre Temperatur auf ca. 65°C ansteigt.

Das erhaltene Produkt ist weiß und homogen und hat eine Viskosität von ca. 800 000 mPa.s. Sein NCO-Gruppengehalt wurde zu 1,6% ermittelt.

Die Zusammensetzung einer kalt härtenden Masse und die Eigenschaften des gehärteten Produkts sind in Beispiel 8, Tabelle 1, wiedergegeben.

Beispiel 5

Dieses Beispiel illustriert die Herstellung einer Dispersion aus 43% Polycarbodiimid auf Basis von Toluylendiisocanat und 57% Polydimethylsiloxan mit Silanolendgruppen ($\eta = 1800$ mPa·s).

1500 g Polydimethylsiloxan des Beispiels 1 wird auf 45°C erwärmt und 1500 g Toluylendiisocyanat des Beispiels 1 zugegeben. Die Mischung wird 30 Minuten gerührt und 1,5 g Phospholinoxid zugesetzt. Die nachfolgende Rührdauer beträgt 3 Stunden, während der sich die Mischung auf etwa 60°C erwärmt.

Man erhält ein weißes, homogenes und fließfähiges Produkt von einer Viskosität von 200 000 mPa·s. Der durch titration bestimmte NCO-Gruppengehalt beträgt 3,1%.

Die Zusammensetzung einer kalt härtenden Masse sowie die Eigenschaften des gehärteten Produktes ist in Beispiel 8, Tabelle 1, wiedergegeben.

Beispiel 6

1500 g Polydimethylsiloxan des beispiels 1 werden in einem Gefäß auf 80°C erwärmt und 1,5 g Phospholinoxid zugesetzt. Unter Rühren werden innerhalb von 2 Stunden bei konstant gehaltener Temperatur 1500 g Toluylendiisocyanat des Beispiels 1 mit gleichförmiger Geschwindigkeit zudosiert. Nach beendeter Zugabe wird 1 Stunde bei 80°C nachgerührt und die Mischung auf Raumtemperatur abgekühlt.

Die erhaltene Dispersion hat eine Viskosität von ca. 700 000 mPa·s und einen NCO-Gehalt von 1,6%.

Die Zusammensetzung einer kalthärtenden Masse sowie die Eigenschaften des gehärteten Produktes ist in Beispiel 8, Tabelle 1 wiedergegegen.

Das erhaltene Produkt wurde als Stabilisierungszusatz gegen hydrolytischen Abbau von heißvulkanisierbarem Siliconkautschuk eingesetzt. Die erzielten Resultate sind in Beispiel 10, Tabelle 3, illustriert.

Beispiel 7

500 g Polydimethylsiloxan mit enständigen Hydroxylgruppen und einer Viskosität von 10000 mPa·s (bei 20°C) werden in einem Gefäß auf 80°C erwärmt und mit 0,5 g Phospholinoxid versetzt. Hierzu werden 500 g Toluylendiisocyanat des Beispiels 1 innerhalb von 2 Stunden zudosiert. Das Produkt wird unter Rühren auf Raumtemperatur abgekühlt. Man erhält eine schwach gelbliche homogene Dispersion mit einer Viskosität von 130 000 mPa·s.

Die Zusammensetzung einer kalt härtenden Mischung sowie die Eigenschaften des gehärteten Produktes sind in Beispiel 8, Tabelle 1 angegeben.

Beispiel 8

Dieses Beispiel zeigt in der Tabelle 1 die Zusammensetzungen als Einkomponentensysteme (in Gew.-%) der kalt härtenden Organosiloxanmassen der Beispiele 1 bis 7 und die Eigenschaften der nach 7 Tagen bei Raumtemperatur ausgehärteten Produkte.

Als Vergleichsversuche A und B sind zwei kalt härtende Organopolysiloxanmassen aus einem reinen Polydimethylsiloxan mit endständigen Hydroxygruppen und einer Viskosität von 50000 mPa·s (bei 20°) hergestellt (Zusammensetzung und Eigenschaften in Tabelle 1).

Die ausgehärteten Produkte A und B haften bei Aufbringung auf Beton und Lagerung unter Wasser weniger als eine Woche lang.

TABELLE 1

| Beispiel Nr. | 1 | 3 | 4 | 4 | 4 | 5 | 5 | 5 | 6 | 7 | 2 | A | B |
|---|---|---|---|---|---|---|---|---|---|---|---|---|---|
| Dispersion von Beispiel Nr. [%] | 64,4 | 64,4 | 94,5 | 64,4 | 55,9 | 94,5 | 64,4 | 55,9 | 55,9 | 55,9 | 64,4 | 64,4* | 55,9* |
| Trimethylsilylgruppen-endgestopptes Polydimethylsiloxan mit der Viskosität 1400 mPa.s | 25,2 | 25,2 | | 25,2 | 20,9 | | 25,2 | 20,9 | 20,9 | 20,9 | 25,2 | 25,2 | 20,9 |
| Äthyltriacetoxysilan | 4,2 | 4,2 | 4,7 | 4,2 | | 4,7 | 4,2 | | | | 4,2 | 4,2 | |
| t-Butoxydiacetoxysilan | 0,9 | 0,9 | | 0,9 | | | 0,9 | | | | 0,9 | 0,9 | |
| Kieselsäure 130.m²/g | 5,2 | 5,2 | | 5,2 | 3,7 | | 5,2 | 3,7 | 3,7 | 3,7 | 5,2 | 5,2 | 3,7 |
| Dibutylzinndiacetat | 0,01 | 0,01 | 0,8 | 0,1 | | 0,8 | 0,1 | | | | 0,01 | 0,01 | |
| Tetraisobutyltitanat | | | | | 4,8 | | | 4,8 | 4,8 | 4,8 | | | 4,8 |
| $CaCO_3$ pulverisiert | | | | | 8,4 | | | 8,4 | 8,4 | 8,4 | | | 8,4 |
| Dibutylzinndilaurat | | | | | 1,0 | | | 1,0 | 1,0 | 1,0 | | | 1,0 |
| Benzamid-Vernetzer Methyl-äthoxy-bis-[N-methyl-benzamido]-silan | | | | | 5,2 | | | 5,2 | 5,2 | 5,2 | | | 5,2 |
| Eigenschaften Shore A Härte DIN 53 505 | 21 | 7 | 31 | 16 | 24 | 32 | 21 | 20 | 18 | 20 | 9 | 12 | 20 |
| E-Modul 100% DIN 53 504 [N/mm²] Prüfkörper nach BV | 3,10 | 2,48 | 9,29 | 4,01 | 4,54 | 13,8 | 5,20 | 4,73 | 3,38 | 3,94 | 1,69 | 3,62 | 4,73 |
| Zugfestigkeit DIN 53 504 [N/mm²] | 9,03 | 10,5 | 16,1 | 11,7 | 10,8 | 31,6 | 19,5 | 11,3 | 9,99 | 10,2 | 12,1 | 8,45 | 11.3 |
| Bruchdehnung DIN 53 504 [%] | 486 | 1308 | 361 | 1010 | 480 | 212 | 634 | 380 | 574 | 422 | 1308 | 584 | 380 |

* Polydimethylsiloxan mit endständigen Hydroxygruppen und einer Viskosität von 50 000 cP bei 20°C.

TABELLE 2

| | Beispiel 7<br>Acetat-Vernetzer | Beispiel 7<br>Benzamid-Vernetzer | Silikon<br>Acetat-Vernetzer | Silikon<br>Benzamid-Vernetzer |
|---|---|---|---|---|
| Modul [MPa] | 0.34 | 0.38 | 0.40 | 0.14 |
| Zugfestigkeit [MPa] | 1.26 | 0.74 | 1.40 | 0.90 |
| Zugfestigkeit bei 120°C [MPa] | 1.37 | 0.69 | 1.41 | 0.86 |
| Druckverformungsrest [%] 72 Std./25°C<br>25 Std./70°C | 23.3<br>22.6<br>15.4<br>13.7 | | 59.4<br>58.5<br>100.0<br>99.3 | |
| Betonhaftung | >90% | 80 – 90% | 80% | 90% |
| ASTM III<br>Kerosin<br>Quellung nach 24 Std. | 0 – 10 Vol-%<br>640 Vol–% | 0 – 10 Vol-%<br>>1000 Vol–% | 0 – 10 Vol-%<br>>1000 Vol–% | 0 – 10 Vol-%<br>>1000 Vol–% |
| Temperaturbeständigkeit:<br>Shore A Härte,<br>O-Wert<br>n.2 Wochen, 160°C<br>n.2 Wochen, 200°C<br>n.2 Wochen, 230°C | 25<br>35<br>25<br>zerstört | 28<br>38<br>53<br>brüchig | 21<br>18<br>14<br>68 | 16<br>16<br><br>zerstört |
| Gewichtaverlust nach 30 Tagen 160°C<br>200°C<br>230°C | –<br>0,8%<br>2,0% | 1,3%<br>3,7%<br>5,2% | 0.15%<br>0.77%<br>3.2% | |
| Überstreichbarkeit:*<br>Alkydal-Decklack<br>1 Strich:<br>2 Striche: | +<br>++ | –<br>– | –<br>+ | –<br>– |

TABELLE 2 (Fortsetzung)

| | Beispiel 7 Acetat-Vernetzer | Beispiel 7 Benzamid-Vernetzer | Silikon Acetat-Vernetzer | Silikon Benzamid-Vernetzer |
|---|---|---|---|---|
| Alkydal-Decklack + 5% Überstreichhilfsmittel | | | | |
| 1 Strich: | +++ | + | +++ | + |
| 2 Striche: | +++ | ++ | ++ | + |

* – Krater, kein Verlauf

\+ fast gut, keine Krater

++ gut, kleine Fehler

+++ sehr gut

Beispiel 9

Das Beispiel illustriert die Herstellung einer kalthärtenden Masse (Zweikomponentensystem) und des gehärteten Produktes daraus.

95 Teile der Dispersion des Beispiels 3 und 5 Teile eines Vernetzers, der aus 97% Kieselsäureäthylester und 3% Dibutylzinndilaurat besteht, werden gemischt. Man läßt die Mischung einige Stunden bei Raumtemperatur und anschließend 5 Stunden bei 65°C härten.

Das ausgehärtete Produkt besitzt folgende Eigenschaften:

Vernetzt mit 5% einer Mischung aus
97 Teilen Monomerer Kieselsäureäthylester
3 Teilen Dibutylzinndilaurat

*Mechanische Werte*

| | | |
|---|---|---|
| Zugfestigkeit | : | 5,2 N/mm² |
| Dehnung | : | 110% |
| Shore-A-Härte | : | 33 |
| Weiterreißfestigkeit | | |
| DIN 53 515 | : | 1,4 kp/cm |
| ASTM 624 B | : | 2,2 kg/cm |
| ASTM 624 C | : | 3,9 kp/cm |
| Dichte | : | 1,043 g/cm³ |

Veränderung der Shore-Härte bei verschiedenen Temperaturen

| | 1 Tag | 10 Tage | 1 Monat |
|---|---|---|---|
| 150°C | 34 | 35 | 35 |
| 180°C | 35 | 30 | 27 |
| 200°C | 36 | 20 | 18 |
| 230°C | 32 | u 20<br>o 12 | u 25<br>o 14 |
| 250°C | 23 | u 22<br>o 12 | u 24<br>o 13 |

u = unten

o = oben

Beispiel 10

Dieses Beispiel erläutert die Stabilität des Siliconkautschuks gegen hydrolytischen Abbau bei Zusatz einer Dispersion des Beispiels 6.

Die Hydrolyse wurde im zugeschmolzenen Rohr mit 50 mg $H_2O$/20 cm³ Luft bei 236°C durchgeführt.

Die zusammensetzung in Gewichtsteilen der Prüfprodukte A und B ist in Tabelle 2 aufgeführt.

Die Produkteigenschaften der Vulkanisate sind in Tabelle 3 angegeben.

Das Produkt A enthielt 100 Gew.-Teile eines heißvulkanisierbaren Siliconkautschuks, 0,6 Gew.-Teile Dicumylperoxid und wies eine Dichte von 1,229 g/cm³ auf. Das Produkt B hatte die gleiche Zusammensetzung, enthielt jedoch zusätzlich 1,0 Gew.-Teile der Dispersion gemäß Beispiel 6 (resultierende Dichte 1,225).

TABELLE 3

| | I | | II | | III | |
|---|---|---|---|---|---|---|
| | A | B | A | B | A | B |
| Festigkeit N/mm² | 83 | 90 | 76 | 85 | 41 | 68 |
| Dehnung % | 340 | 345 | 285 | 300 | 290 | 330 |
| Belastung 100% | 28 | 28 | 31 | 28 | 19 | 24 |
| Belastung 300% | 76 | 82 | – | 85 | – | 61 |
| Shore A Härte | 66 | 64 | 64 | 65 | 63 | 65 |
| Stoßelastizität | 27 | 30 | 28 | 26 | – | – |

I 10' 170°C Presse
II 10' 170°C Presse + 6 h 200°C Heißluft
III 10' 170°C Presse + 6 h 200°C Heißluft + 4 h 236°C Heißluft

Beispiel 11

Dieses Beispiel illustriert die Herstellung einer Dispersion aus 64% Polycarbodiimid auf Toluylendiisocyanat-Basis und 36% Polydimethylsiloxan mit Silanolendgruppen ($\eta = 10\,000$ mPa·s).

300 g Polydimethylsiloxan des Beispiels 7 werden auf 80°C erhitzt. Man gibt 0,5 g Phospholinoxid hinzu und tropft innerhalb von 2 Stunden bei 30°C 700 g Toluylendiisocyanat des beispiels 1 zu. Nach beendeter Zugabe wird eine weitere Stunde bei 80°C gerührt.

Es wird eine weiße, homogene, vernetzbare nicht fließende Mischung erhalten.

Beispiel 12

250 g Polydimethylsiloxan des Beispiels 1 (18 000 mPa·s) und 250 g Polydimethylsiloxan des Beispiels 2 (1000 mPa·s) werden zusammen mit 0,5 g Phospholinoxid auf 80°C erhitzt. Zu der Mischung werden innerhalb von 2 Stunden bei 80°C 500 g Toluylendiisocyanat des Beispiels 1 zudosiert. Nach der Zugabe wird 1 Stunde bei 80°C nachgerührt.

Das cremefarbige Produkte weist eine Viskosität von 100 000 mPa·s auf und ist vernetzbar.

Beispiel 13

216 g Polydimethylsiloxan des Beispiels 7 und 280 g eines Polydimethylsiloxans mit Methylendgruppen und einer Viskosität von 1400 mPa·s (20°) werden zusammen mit 0,5 g Phospholinoxid auf 80°C erhitzt. Innerhalb von 2 Stunden werden 504 g Toluylendiisocyanat des Beispiels 1 unter stetem Rühren gleichförmig zudosiert. Nach beendeter Zugabe wird 1 Stunde bei 80°C nachgerührt.

Das Produkt ist gelblich und homogen und besitzt eine Viskosität von 56 400 mPa·s.

Beispiel 14

Dieses Beispiel illustriert die Herstellung einer nicht fließfähigen Masse aus 43% Polycarbodiimid auf Toluylendiisocyanat-Basis und 57% Polydimethylsiloxan mit Silanolendgruppen ($\eta = 10\,000$ mPa·s) in einem Lösungsmittel.

100 g Polydimethylsiloxan des Beispiels 1 werden in 200 ml trockenem Toluol gelöst und 100 g Toluylendiisocyanat des Beispiels 1 zugegeben. Die Mischung wird während 2 Stunden bei 110°C gerührt. Man kühlt die Mischung auf 50°C ab und gibt 0,1 g Phospholinoxid zu der Mischung. Man rührt eine weitere Stunde bei 50°C, erhitzt auf 110°C und beläßt bei dieser Temperatur so lange, bis die $CO_2$-Entwicklung beendet ist.

Nach Abdampfen des eingesetzten Lösungsmittels erhält man ein schwach gelbliches, nicht fließendes, gummiartiges Produkt.

Beispiel 15

Dieses Beispiel illustriert die Herstellung einer Dispersion aus 40% Polycarbodiimid auf Basis von 4,4'-Diisocyanatodiphenylmethan und 60% Polydimethylsiloxan mit Silanolendgruppen ($\eta = 50\,000$ mPa·s). Das Polycarbodiimid wurde in Pulverform eingesetzt.

Eine Mischung aus 1,5 kg Polydimethylsiloxan mit endständigen Silanolgruppen und einer Viskosität von 50 000 mPa·s (20°C) und 1 kg eines Polycarbodiimidpulvers auf Basis von 4,4'-Diisocyanatodiphenylmethan (1,8% NCO) werden 4 Stunden lang bei Raumtemperatur in einem Planeten-Mischer mit 80 U/Min. gemischt.

Man erhält eine weiße, homogene, nicht fließfähige, vernetzbare Paste.

Beispiel 16

Dieses Beispiel illustriert die Herstellung einer Dispersion aus 30% Polycarbodiimid auf Basis von 4,4'-Diisocyanatodiphenylmethan, als Pulver eingesetzt und 70% Polydimethylsiloxan mit Silanolendgruppen ($\eta$ = 18 000 mPa·s) in einem Lösungsmittel.

60 g eines Polycarbodiimidpulvers auf Basis von 4,4'-Diisocyanatodiphenylmethan mit der folgenden Formel

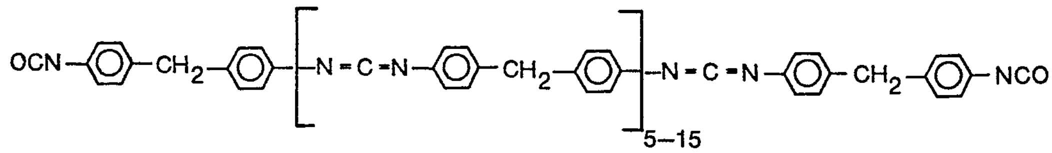

werden in trockenem Toluol gelöst. Dazu werden 140 g Polydimethylsiloxan des Beispiels 1 gegeben. Die Mischung wird 3 Stunden bei Raumtemperatur gerührt und das Toluol anschließend bei 15 Torr und 60°C abdestilliert.

Man erhält eine gelbe, fließfähige und vernetzbare Dispersion.

Beispiel 17

Dieses Beispiel illustriert die Herstellung einer Dispersion aus 45% Polycarbodiimid auf Basis von 4,4'-Diisocyanato-Diphenylmethan und 55% Polydimethylsiloxan mit Silanolendgruppen ($\eta$ = 18 000 mPa·s).

750 g Polydimethylsiloxan des Beispiels 1 werden auf 80°C erhitzt und 0,75 ml Phospholinoxid zugegeben. Innerhalb von 2 Stunden werden bei 80°C unter stetigem Rühren 750 g 4,4'-Diisocyanatodiphenylmethan zudosiert und nach beendeter Zugabe 1 Stunde bei 80°C nachgerührt.

Man erhält ein weißes, homogenes, vernetzbares Produkt mit einer Viskosität von 336 000 mPa·s.

Beispiel 18

1425 g Polydimethylsiloxan des Beispiels 1 werden bei 80°C mit 0,75 ml Phospholinoxid vermischt. Hierzu gibt man innerhalb von 2 Stunden unter Rühren 75 g Hexamethylen-1,6-diisocyanat und rührt anschließend 1 Stunde bei 80°C nach.

Man erhält ein weißes, zähes und vernetzbares Produkt.

Beispiel 19

Dieses Beispiel illustriert die Herstellung einer Dispersion aus 9% Polycarbodiimid auf biuretgruppenhaltiger Trisisocyanat-Basis und 91% Polydimethylsiloxan mit Silanolendgruppen ($\eta$ = 18 000 mPa·s).

900 g Polydimethylsiloxan des Beispiels 1 und 100 g eines Triisocyanate folgender Formel

$$OCN(CH_2)_6N[CONH(CH_2)NCO]_2$$

werden bei 50°C 1 Stunde vermischt. Man gibt 0,5 ml Phospholinoxid zu und rührt weitere 1,5 Std. bei 50°C. Die Mischung wird auf 80°C erhitzt und weitere 2,5 Std. gerührt.

Man erhält nach Abkühlung auf Raumtemperaur ein weißes, homogenes und vernetzbares Produkt mit einer Viskosität von 27 000 mPa·s.

Beispiel 20

Dieses Beispiel illustriert die Herstellung einer Dispersion aus 44% Polycarbodiimid auf Basis einer Mischung aus Toluylendiisocyanat des Beispiels 1 und 4,4'-Diisocyanatodiphenylmethan im Mischungsverhältnis 1:1 und 56% Polydimethylsiloxan mit Silanolendgruppen ($\eta$ =18 000 mPa·s).

600 g Polydimethylsiloxan des Beispiels 1 werden auf 80°C erwärmt und 0,6 ml Phospholinoxid zugegeben. 600 g einer Mischung aus Toluylendiisocyanat des Beispiels 1 und 4,4'-Diisocyanatodiphenylmethan (Gewichtsverteilung 1:1) werden innerhalb von 2 Stunden bei 80°C gleichmäßig zudosiert und danach bei gleicher Temperatur 1 Stunde nachgerührt.

Man erhält eine weiße, homogene und vernetzbare Dispersion mit einer Viskosität von 178 000 mPa·s.

Beispiel 21

Dieses Beispiel illustriert die Herstellung einer Dispersion aus 43% Polycarbodiimid auf Toluylendiisocyanatbasis und 57% Polydimethylsiloxan mit Vinylendgruppen.

100 g eines Polydimethylsiloxans mit endständigen Vinylgruppen und einer Viskosität von 4320 mPa·s (bei 20°C) werden mit 0,1 ml Phospholinoxid unter Rühren auf 80°C erhitzt. 100 g Toluylendiisocyanat des Beispiels 1 werden innerhalb von 2 Stunden bei 80°C zudosiert. Nach beendeter Zugabe wird bei gleicher Temperatur 1 Stunde nachgerührt und anschließend abgekühlt.

Man erhält eine gelbliche Dispersion mit einer Viskosität von 15 390 mPa·s.

Zur Herstellung einer kalt härtenden Zusammensetzung und eines gehärteten Produktes daraus wurde eine Mischung aus 30 g der oben hergestellten Dispersion und 0,5 g eines Methylhydrogensiloxans der Formel

$$(CH_3)_3Si[OSi(CH_3)H]_pOSi(CH_3)_3$$

mit einer Viskosität von ca. 15 cP mit einem Tropfen einer $Pf(CO)_2\ Cl_2$-Lösung in Methylvinylsiloxantetramer (1,92% Pt-Gehalt) gemischt und in einer Form bei Raumtemperatur aufbewahrt. Nach 12 Stunden war die Masse durchgehärtet.

Beispiel 22

Dieses Beispiel illustriert die Herstellung einer Dispersion aus 24% Polycarbodiimid auf Basis von Toluylendiisocyanat, 43% eines $\alpha,\omega$-Dihydroxypolydimethylsiloxan und 33% eines Siliconharzes.

Eine Mischung aus 400 g Polydimethylsiloxan des Beispiels 1 und 300 g eines Siliconharzes, das durch Cohydrolyse von 10 Mol Dimethyldichlorsilan, 10 Mol Diphenyldichlorsilan und 80 Mol Phenyltrichlorsilan unter Zusatz von Methanol dargestellt wurde, mit einer Viskosität von 11 500 mPa·s und einem Methoxygruppengehalt von 13,7 Gew.-%, wurde auf 80°C erwärmt und mit 0,5 ml Phospholinoxid versetzt. Innerhalb von 2 Stunden werden bei 80°C unter Rühren 300 g Toluylendiisocyanat des Beispiels 1 zudosiert und während einer Stunde bei gleicher Temperatur nachgerührt.

Nach Abkühlen erhält man eine cremefarbige, homogene und vernetzbare Masse mit einer Viskosität von 141 000 mPa·s.

**Patentansprüche**

1. Mit Polycarbodiimid modifizierte $\alpha,\omega$-Dihydroxypolysiloxane, dadurch gekennzeichnet, daß das $\alpha,\omega$-Dihydroxypolysiloxan und das Polycarbodiimid als unterscheidbare Phasen vorliegen.

2. Verfahren zur Herstellung von mit Polycarbodiimid modifizierten $\alpha,\omega$-Dihydroxypolysiloxanen gemäß Anspruch 1, dadurch gekennzeichnet, daß das Polycarbodiimid durch Reaktion aus Isocyanaten der allgemeinen Formel.

$$OCN—R'—NCO$$

wobei
R' für einen gegebenenfalls auch mit NCO-Gruppen substituierten Alkylen- oder Arylenrest mit vorzugsweise bis zu 24 C-Atomen steht,
in Gegenwart eines an sich bekannten Carbodiimidisierungskatalysators in $\alpha,\omega$-Dihydroxypolysiloxan in situ erzeugt wird.

3. Verwendung der mit Polycarbodiimid modifizierten $\alpha,\omega$-Dihydroxypolysiloxane zur Herstellung von unter Einfluß von Feuchtigkeit härtbaren Eine- oder Zweikomponentensystemen.

**Revendications**

1. $\alpha,\omega$-dihydroxypolysiloxannes modifiés par un polycarbodiimide, caractérisés en ce que l'$\alpha,\omega$-dihydroxypolysiloxanne et le polycarbodiimide sont présents sous forme de phases distinctes.

2. Procédé pour la préparation d'$\alpha,\omega$-dihydroxypolysiloxannes modifiés par un polycarbodiimide selon la revendication 1, caractérisé en ce que le polycarbodiimide est produit par réaction d'isocyanates de formule générale

$$OCN—R'—NCO$$

dans laquelle R' représente un reste alkylène ou arylène, de préférence jusqu'en $C_{24}$, éventuellement substitué aussi par des groupes NCO, en présence d'un catalyseur de carbodiimidisation connu in situ dans l'$\alpha,\omega$-dihydroxypolysiloxanne.

3. Utilisation des $\alpha,\omega$-dihdyroxypolysiloxannes modifiés par un polycarbodiimide pour la préparation de systèmes à un ou à deux composants durcissables sous l'influence de l'humidité.

## Claims

1. $\alpha,\omega$-Dihydroxypolysiloxanes modified with polycarbodiimide, characterised in that the $\alpha,\omega$-dihydroxypolysiloxane and the polycarbodiimide are present as discernible phases.

2. A method of manufacturing $\alpha,\omega$-dihydroxypolysiloxanes modified with polycarbodiimide according to Claim 1, characterised in that the polycarbodiimide is produced in situ by the reaction of isocyanates of the general formula

OCN—R′—NCO

wherein

R′ represents an alkylen or arylene radical with preferably up to 24 C atoms which is optionally also substituted by NCO groups,

in the presence of a known cabodiimidisation catalyst in $\alpha,\omega$-dihydroxypolysiloxane.

3. Use of the $\alpha,\omega$-dihydroxypolysiloxanes modified with polycarbodiimide for the production of one- or two-component systems which cure under the effect of moisture.